# EUROPÄISCHE PATENTSCHRIFT

(11) **EP 3 020 283 B1**
(45) Veröffentlichungstag und Bekanntmachung des Hinweises auf die Patenterteilung: **01.03.2017**
(21) Anmeldenummer: 14192797.0
(22) Anmeldetag: 12.11.2014
(51) Int. Cl.: A23B 7/005, A23L 3/16, A23L 27/00

(54) **Verfahren zur Sterilisation von Nahrungsmitteln, insbesondere von Gewürzen**
Method for sterilizing foodstuffs, in particular spices
Procédé de stérilisation d'aliments, en particulier d'épices

(43) Veröffentlichungstag der Anmeldung: 18.05.2016
(73) Patentinhaber: Pallmann Maschinenfabrik GmbH & Co. KG, 66482 Zweibrücken (DE)
(72) Erfinder: PANDYARAM, Ramana, Pallikarnai, Chennai 600100 (IN); PALLMANN, Hartmut, 66482 Zweibrücken (DE)
(74) Vertreter: Kurz, Andreas

(56) Entgegenhaltungen:
- EP-A1- 0 556 101
- EP-A2- 0 269 257
- WO-A1-90/00865
- WO-A1-96/20606
- WO-A1-2007/031236
- US-A- 5 523 053

## Beschreibung

Die Erfindung betrifft ein Verfahren zur Sterilisation von Nahrungsmitteln unter Nutzung deren Eigenfeuchte, insbesondere von Nahrungsmitteln mit flüchtigen Stoffen wie z.B. Gewürzen.

Bei der industriellen Herstellung von Lebensmittelprodukten ist zu gewährleisten, dass die Produkte in dem Zeitraum von deren Herstellung bis zu ihrem Konsum durch den Endverbraucher nicht verderben. Dies gilt gleichermaßen für Lebensmittel wie auch für Gewürze, die im Regelfall stets mehr oder weniger stark durch Mikroorganismen belastet sind. Aufgrund der zunehmend kritischen Einstellung der Verbraucher gegenüber der Verwendung von Konservierungsstoffen zur Haltbarmachung, gewinnen alternative Verfahren zunehmend an Bedeutung. Vor allem Sterilisationsverfahren, bei denen durch Wärmebehandlung der Lebensmittel die im Produkt enthaltenen Mikroorganismen abgetötet werden, werden in großem Umfang angewandt und haben sich bei der Sterilisation vieler Arten von Lebensmittel und insbesondere bei der Sterilisation von Gewürzen bewährt.

EP 0556101 lehrt beispielsweise ein Verfahren zur Sterilisierung von Gemüse durch Dampf.

Ein derartiges Verfahren ist beispielsweise in der EP 0 891 714 A2 beschrieben, bei dem als Wärmeträgermedium feuchter Wasserdampf unter hohem Druck in eine Sterilisationskammer eingeleitet wird, die zuvor mit den zu behandelnden Lebensmitteln befüllt worden ist. Die Sterilisation erfolgt dann in der Kammer bei einer Temperatur von über 100° C und einer Einwirkdauer von einigen Sekunden bis wenigen Minuten. Vor dem Öffnen der Druckkammer wird der Druck abgelassen, wobei der feuchte Dampf in die Umgebung entweicht. Zur Herstellung des ursprünglichen Feuchtegehalts des Lebensmittels und zu dessen Abkühlung kann dieser Vorgang durch Erzeugen eines Unterdrucks in der Kammer unterstützt werden.

Diese Vorgehensweise erweist sich in vielen Fällen als ausreichend, um eine Sterilisation der Lebensmittel zu gewährleisten. Bei empfindlichen Lebensmitteln wie Gewürzen, deren Qualität von geschmackgebenden Aromastoffen wie z.B. ätherischen Ölen und anderen flüchtigen Stoffen abhängt, müssen bei Anwendung derartiger Verfahren jedoch Qualitätseinbußen beim fertigen Produkt in Kauf genommen werden. Diese sind darauf zurückzuführen, dass im Zuge der Wärmebehandlung ein Teil der Aromastoffe mit dem in die Umgebungsluft entweichenden Dampf verloren geht, so dass derart behandelte Lebensmittel beim Verzehr nicht mehr ihre volle Geschmacksvielfalt entfalten können.

Dieser Effekt kommt insbesondere bei Gewürzen zum Tragen, die in fein gemahlener Form über eine große Gesamtoberfläche verfügen, über die flüchtige Stoffe schnell aus dem Produkt entweichen. Handelt es sich bei den Lebensmitteln hingegen um stückiges Gut, so ist bei der Sterilisation sicher zu stellen, dass die Sterilisation nicht lediglich auf die Produktoberfläche beschränkt bleibt, sondern auch Tiefenwirkung entfaltet.

Vor diesem Hintergrund besteht die Aufgabe der Erfindung darin, ein Verfahren zur effektiven und dabei gleichzeitig schonenden Sterilisation von Nahrungsmitteln insbesondere von Gewürzen zu entwickeln, bei dem die Qualität des Lebensmittels weitestgehend erhalten bleibt.

Diese Aufgabe wird durch ein Verfahren mit den Merkmalen des Patentanspruchs 1 gelöst.

Vorteilhafte Ausführungsformen ergeben sich aus den Unteransprüchen.

Die Erfindung basiert auf der Erkenntnis, dass sich bei der Sterilisation von Lebensmitteln mit heißem feuchtem Dampf ein wesentlicher Teil der Aromastoffe im Dampf löst. Entweicht nun die Dampfphase nach erfolgter Wärmebehandlung in die Atmosphäre, so gehen dabei auch die im Dampf gelösten und für die Produkteigenschaften wertvollen Inhaltsstoffe verloren. Es ist das Verdienst der Erfindung diese Zusammenhänge erkannt und darauf aufbauend eine Lösung der damit einhergehenden Problematik bereit zu stellen. Die erfindungsgemäße Lösung sieht dabei vor, den für die Sterilisation notwendigen heißen Dampf aus der Eigenfeuchte der Lebensmittel selbst zu gewinnen und im Zuge der Wärmebehandlung dem Produkt wieder zurückzuführen. Der Dampf wird dabei als Prozessgas bzw. Prozesswasser in einem geschlossenen Kreislauf geführt. Im Dampfstrom enthaltene Aromastoffe gehen daher nicht verloren, sondern werden dem Lebensmittel im Dampfstrom wieder zugeführt mit dem großen Vorteil, dass die ursprüngliche Qualität des Lebensmittels durch den Sterilisationsprozess nicht beeinträchtigt wird.

Zur Umwandlung der Eigenfeuchte der Lebensmittel in Dampf sieht eine vorteilhafte Ausführungsform der Erfindung vor, die Temperatur T₁ im Sterilisationsbehälter konstant zu halten und den Druck P₁ zu regeln. Das hat den Vorteil, dass die Temperatur zur Vermeidung thermischer Schädigung an die Art der Lebensmittel angepasst werden kann. Die Steuerung des Drucks P₁ im Sterilisationsbehälter kann dabei unmittelbar und ohne große Verzögerung erfolgt, was eine dynamische und präzise Regelung der atmosphärischen Bedingungen im Sterilisationsbehälter ermöglicht.

Vorteilhafterweise wird zur Regelung des Drucks im Sterilisationsbehälter ein Teil des aus den Lebensmitteln gewonnenen Dampfes in den Sterilisationsbehälter zurückgeführt. Durch diese Maßnahme lassen sich einerseits die ursprünglichen Produktinhaltsstoffe auch in diesem Kreislauf wieder zurück in den Sterilisationsbehälter führen; andererseits werden keine zusätzlichen von außen zugeführten Gase benötigt, die unter Umständen die Produkteigenschaften beeinflussen könnten.

Zur Kondensation des Dampfes aus dem Sterilisationsbehälter wird in vorteilhafter Weiterbildung der Erfindung vorgeschlagen, den Druck und/oder die Temperatur des Dampfes zu senken. Das dabei gewonnene Kondensat kann dann über seinen Siedepunkt hinaus erhitzt werden, was bei Rückführung des überhitzen Kondensats in den Sterilisationsraum zur einer schlagartigen Entspannung unter Bildung von heißem Dampf führt. Auf diese Weise lässt sich eine äußerst wirkungsvolle Sterilisation der Lebensmittel erreichen, die nicht auf die Produktoberfläche beschränkt bleibt, sondern auch Tiefenwirkung entfaltet. Als in diesem Sinne besonders geeignet hat sich ein Erhitzen des Kondensats auf eine Temperatur im Bereich zwischen 110° C und 135° C, vorzugsweise auf 130° C herausgestellt.

Als vorteilhaft erweist sich ferner, dass das erfindungsgemäße Verfahren sowohl für den kontinuierlichen als auch diskontinuierlichen Betrieb geeignet ist und daher größtmögliche Gestaltungsfreiheit bei der Umsetzung von Anlagen zur Sterilisation von Lebensmitteln lässt.

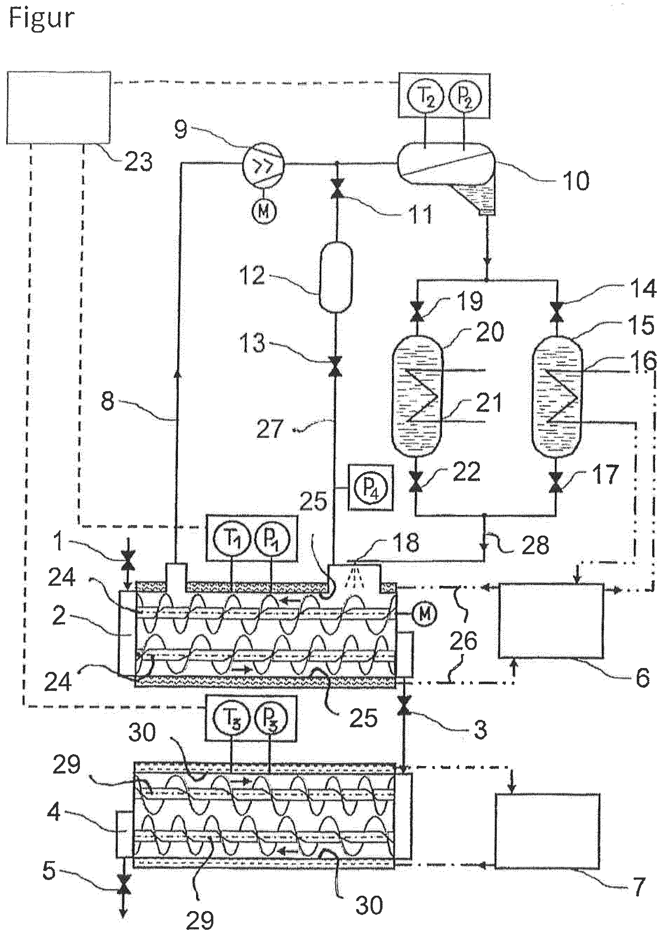

Die Erfindung wird nachstehend anhand eines in der Zeichnung dargestellten Ausführungsbeispiels näher erläutert, wobei weitere Merkmale und Vorteile offenbar werden. Das Ausführungsbeispiel stellt lediglich einen Weg zur Ausführung der Erfindung dar, ohne die Erfindung jedoch darauf zu beschränken.

Die einzige Figur zeigt in schematischer Darstellung den Ablauf des erfindungsgemäßen Verfahrens sowie die dazu notwendigen verfahrenstechnischen Anlagenkomponenten.

Eine erfindungsgemäße Sterilisationsanlage umfasst zunächst einen Sterilisationsbehälter in Form eines Sterilisationskessels 2, dem das zu sterilisierende Aufgabegut über einen ventilgesteuerten Guteinlauf 1 zugeführt wird. Der Sterilisationskessel 2 ist druckfest ausgebildet und mit Agitationswerkzeugen zum kontinuierlichen Bewegen und Durchmischen des Aufgabeguts ausgestattet. Im vorliegenden Fall bestehen die Agitationswerkzeuge aus zwei achsparallel zueinander verlaufenden Förderschnecken 24, deren gegenläufige Schneckenwendeln das Aufgabegut einer kontinuierlichen Kreislaufströmung im Sterilisationskessel 2 unterwerfen.

Der Sterilisationskessel 2 ist zudem mit Wärmetauscherflächen 25 ausgerüstet, die durch ihren Kontakt mit dem Aufgabegut dieses erhitzen. Dabei beziehen die Wärmetauscherflächen 25 die notwendige thermische Energie von einer Heizquelle 6, in der ein Wärmeträgerfluid erhitzt und über ein Rohrleitungssystem 26 den Wärmetauscherflächen 25 im Kreislauf zugeführt wird. In Abhängigkeit von der Art des Aufgabeguts wird dieses beispielsweise auf eine Temperatur T₁ erwärmt, die zwischen 50° C und 90° C liegen kann, vorzugsweise 85° C beträgt. Bei dieser Temperatur T₁ entweicht die im Aufgabegut enthaltene Feuchte als trockener Dampf in die Atmosphäre des Sterilisationskessels 2, ohne dabei zu kondensieren.

Ferner umfasst die Anlage zur Sterilisation von Nahrungsmitteln eine elektronische Steuer- und Regelungseinheit 23, in der die Sollwerte für produktspezifische Verfahrensparameter und Verfahrensabläufe hinterlegt sind. Die in den jeweiligen Anlagenkomponenten vorhandenen Istwerte, insbesondere über die Temperatur, den Druck und die Feuchtigkeit, werden von dort jeweils angeordneten Sensoren erfasst und an die Steuer- und Regelungseinheit 23 gemeldet.

Mit Hilfe der Steuer- und Regelungseinheit 23 und den von den Sensoren übermittelten Daten sowie der Ausführung erforderlicher Steuer- und Regelmaßnahmen werden im Sterilisationskessel 2 klimatische Bedingungen geschaffen und aufrechterhalten, bei denen die Taupunktparameter noch nicht erreicht sind, das heißt, dass es im Sterilisationskessel 2 zu keiner Kondensatbildung kommt. Im vorliegenden Fall wird dabei eine konstante, an die Art des Aufgabeguts angepasste Temperatur T₁ vorgegeben und durch entsprechende Regelung des Drucks P₁ eine Kondensatbildung im Sterilisationskessel 2 verhindert.

Mit Hilfe eines Kompressors 9 wird über eine Druckleitung 8 der trockene Dampf aus dem Sterilisationskessel 2 abgezogen und zu einem Teil zur Regelung des Drucks P₁ in den Sterilisationskessel 2 zurückgeführt. Zu diesem Zweck ist in die Druckleitung 27 ein zweiter, zwischen einem ersten Absperrventil 11 und zweiten Absperrventil 13 liegender Druckbehälter 12 integriert, dem mittels des Kompressors 9 der trockene Dampf zugeführt und dort zwischengespeichert wird. Die elektronische Steuer- und Regelungseinheit 23 steuert die Ventile 11 und 13 derart, dass stets ein ausreichend hoher Druck im zweiten Druckbehälter 12 vorhanden ist, d.h. dass der dortige Druck stets größer ist als der im Sterilisationskessel 2 notwendige Druck P₁, und dass der Druck P₁ im Sterilisationskessel 2 in Abhängigkeit der vorhandenen Temperatur T₁ so eingestellt wird, dass der Taupunkt des Dampfes nicht erreicht wird.

Der andere Teil des trockenen Dampfes, der nicht im zweiten Druckbehälter 12 zwischengespeichert ist, wird von dem Kompressor 9 in einen dritten Druckbehälter 10 gepumpt, wo die elektronische Steuer- und Regelungseinheit 23 die Temperatur T₂ und den Druck P₂ so regelt, dass es zur Kondensatbildung kommt. Die im trockenen Dampf gelöste Feuchte kondensiert also und sammelt sich im Druckbehälter 10 als flüssiges Kondensat, das wie nachfolgend genauer erläutert, als überhitztes Kondensat zurück in den Sterilisationskessel 2 geführt wird.

Im vorliegenden Ausführungsbeispiel weist die Anlage hierzu einen ersten Heizkessel 15 und zweiten Heizkessel 20 auf, die über die Heizkreisläufe 16 und 21 von der Heizquelle 6 mit der notwendigen thermischen Energie versorgt werden. Die Heizkessel 15 und 20 werden durch entsprechende Steuerung der Ventile 14 und 19 wechselweise mit dem Kondensat aus dem Druckbehälter 10 befüllt. In den Heizkesseln 15 und 20 wird das Kondensat auf eine Temperatur oberhalb der Siedetemperatur erhitzt, beispielsweise auf 130° C, und liegt dadurch im überhitzten Zustand vor. Während einer der Kessel 15, 20 befüllt und darin das Kondensat erhitzt wird, wird gleichzeitig der andere Kessel 15, 20 durch entsprechende Steuerung der Ventile 17 und 22 entleert, wobei das überhitzte Kondensat über die Leitung 28 und über die Düse 18 zurück in den Sterilisationskessel 2 geführt wird. Nach Austritt aus der Düse 18 kommt es schlagartig zum Sieden des Kondensats und damit zur Bildung von Dampf, der im Bereich der Düse 18 auf das im Sterilisationskessel 2 im Kreislaufstrom der Düse 18 zugeführte Aufgabegut trifft und die Sterilisation des Aufgabeguts bewirkt. Durch die Rückführung des Kondensats bekommt das Aufgabegut seine ursprüngliche Feuchte und seine ursprünglichen Inhaltsstoffe zurück.

Nach erfolgter Sterilisation gelangt das Aufgabegut über eine ventilgesteuerte Produktauslaufleitung 3 in einen nachgeschalteten Kühlkessel 4. Der Kühlkessel 4 ist ähnlich dem Sterilisationskessel 2 ausgebildet mit zwei parallelen Förderschnecken 29, die das Aufgabegut im Kreislauf fördern und mit Wärmetauscherflächen 30, die an eine Kühlquelle 7 angeschlossen sind, um die dem Aufgabegut noch innewohnende Wärme zu entziehen. Mit Hilfe der elektronischen Steuer- und Regelungseinheit 23 wird in dem Kühlkessel 4 der Druck auf einen vorbestimmten Wert P₃ abgesenkt und das Aufgabegut auf eine vorbestimmte Temperatur T₃ abgekühlt, bevor es zur weiteren Verarbeitung über den Materialauslass 5 aus dem Kühlkessel 4 abgezogen wird.

Es versteht sich, dass die vorliegende Erfindung nicht auf die im Ausführungsbeispiel beschriebene Ausführungsform beschränkt ist, sondern sämtliche Variationen mit umfasst, die sich dem Fachmann aufgrund seines Fachwissens ohne Weiteres erschließen.

## Patentansprüche

1. Verfahren zur Sterilisation von Nahrungsmitteln unter Nutzung deren Eigenfeuchte, insbesondere von Nahrungsmitteln mit flüchtigen Stoffen wie zum Beispiel Gewürzen in ganzer, pulverförmiger oder pastöser Form, **gekennzeichnet durch** die Verfahrensschritte:
a) Befüllen eines Sterilisationsbehälters (2) mit eigenfeuchten Nahrungsmitteln,
b) Erhitzen der Nahrungsmittel im Sterilisationsbehälter (2) bis zu einer Temperatur T₁ und Beaufschlagen der Nahrungsmittel bis zu einem Druck P₁, bei denen die in den Nahrungsmitteln vorhandene Eigenfeuchte als Dampf in die Atmosphäre des Sterilisationsbehälter (2) übergeht ohne dabei zu kondensieren,
c) Abzug des Dampfes aus dem Sterilisationsbehälter (2),
d) Kondensation des Dampfes zur Erzeugung eines Kondensats,
e) Erhitzen des Kondensats auf eine Temperatur T₂, die zur Sterilisation der Nahrungsmittel geeignet ist,
f) Rückführung des erhitzen Kondensats in den Sterilisationsbehälter (2) zur Durchführung der Sterilisation der Nahrungsmittel,
g) Entnahme der sterilisierten Nahrungsmittel aus dem Sterilisationsbehälter (2).

2. Verfahren nach Anspruch 1, **dadurch gekennzeichnet, dass** bei der Ausführung von Schritt b) die Temperatur T₁ konstant gehalten und der Druck P₁ geregelt wird.

3. Verfahren nach Anspruch 1 oder 2, **dadurch gekennzeichnet, dass** zur Regelung des Drucks P₁ im Sterilisationsbehälter (2) der in Schritt c) abgezogene Dampf zum Teil unter einem Druck P₄ in den Sterilisationsbehälter (2) zurückgeführt wird.

4. Verfahren nach einem der Ansprüche 1 bis 3, **dadurch gekennzeichnet, dass** der Dampf bei der Ausführung von Schritt d) durch Druckminderung mit einem Druck P₂ beaufschlagt wird.

5. Verfahren nach einem der Ansprüche 1 bis 4, **dadurch gekennzeichnet, dass** das Kondensat bei der Ausführung von Schritt e) auf eine Temperatur über den Siedepunkt des Kondensats hinaus erhitzt wird.

6. Verfahren nach einem der Ansprüche 1 bis 5, **dadurch gekennzeichnet, dass** das Kondensat im Schritt e) auf eine Temperatur im Bereich von 110° C bis 135° C erhitzt wird, vorzugsweise auf 130° C.

7. Verfahren nach einem der Ansprüche 1 bis 6, **dadurch gekennzeichnet, dass** das Kondensat bei der Ausführung des Schritts f) in Dampf umgewandelt wird.

8. Verfahren nach einem der Ansprüche 1 bis 7, **dadurch gekennzeichnet, dass** die Nahrungsmittel im Anschluss an die Sterilisation abgekühlt werden.

9. Verfahren nach einem der Ansprüche 1 bis 8, **dadurch gekennzeichnet, dass** das Verfahren kontinuierlich oder diskontinuierlich ausgeführt wird.

## Claims

1. A method for the sterilization of foodstuffs using the inherent moisture content of the foodstuffs, especially foodstuffs containing volatile substances as for instance whole spices, spice powders and spice pastes, **characterized by** the following process steps:
a) Filling of a sterilizing vessel(2) with the foodstuffs at their inherent moisture content,
b) Heating of foodstuffs in the sterilizing vessel(2) until a temperature of T₁ is achieved and pressurizing the foodstuffs until a pressure of P₁ is achieved, wherein the moisture content inherent to the foodstuffs is released in the atmosphere of the sterilizing vessel (2) as steam without condensing in doing so,
c)Extraction of the steam out of the sterilizing vessel (2),
d) Condensation of the steam to produce a condensate,
e) Heating of the condensate up to a temperature T₂ suitable for the sterilization of the foodstuffs,
f) Returning the heated condensate to the sterilizing vessel (2) to carry out the sterilization of the foodstuffs,
g) Removal of the sterilized foodstuffs out of the sterilizing vessel (2).

2. A method according to claim 1, **characterized in that** when carrying out the step b) the temperature T₁ is held constant and the pressure P₁ is controlled.

3. A method according to claims 1 or 2, **characterized in that** for controlling the pressure P₁ in the sterilizing vessel (2), the steam extracted in step c) is partly returned to the sterilizing vessel (2) at a pressure P₄.

4. A method according to one of the claims 1 to 3, **characterized in that** the steam, when carrying out the step d), is pressurized to a pressure P₂ by reducing the pressure.

5. A method according to one of the claims 1 to 4, **characterized in that** the condensate, when carrying out step e) is heated up to a temperature exceeding the boiling point of the condensate.

6. A method according to one of the claims 1 to 5, **characterized in that** in step e) the condensate is heated up to a temperature ranging from 110° C to 135° C, preferably 130° C.

7. A method according to one of the claims 1 to 6, **characterized in that** when carrying out the step f) the condensate is transformed into steam.

8. A method according to one of the claims 1 to 7, **characterized in that** the foodstuffs are cooled after the sterilization.

9. A method according to one of the claims 1 to 8, **characterized in that** the method is carried out in a continuous or in a batch mode.

## Revendications

1. Procédé pour la stérilisation d'aliments en utilisant leur humidité inhérente, en particulier d'aliments contenant des matières volatiles comme par exemple les épices entières, les épices sous forme de poudre ou de pâte, le procédé étant **caractérisé par** les étapes suivantes:
a) Remplissage d'un récipient de stérilisation (2) avec des aliments à leur humidité inhérente,
b) Chauffage des aliments dans le récipient de stérilisation (2) à une température T₁ et pressurisation des aliments à une pression P₁, durant lesquels l'humidité présente dans les aliments est transformée en vapeur dans le récipient de stérilisation (2) sans condenser,
c) Extraction de la vapeur hors du récipient de stérilisation (2),
d) Condensation de la vapeur pour la production d'un condensat,
e) Chauffage du condensat à une température T₂ propice à la stérilisation des aliments,
f) Redirection du condensat chauffé vers le récipient de stérilisation (2) pour procéder à la stérilisation des aliments,
g) Enlèvement des aliments stérilisés hors du récipient de stérilisation (2).

2. Procédé selon la revendication 1, **caractérisé en ce que**, lors de la réalisation de l'étape b), la température T₁ est maintenue constante et la pression P₁ régulée.

3. Procédé selon la revendication 1 ou 2, **caractérisé en ce que**, pour la régulation de la pression P₁ dans le récipient de stérilisation (2), la vapeur extraite lors de l'étape c) est en partie redirigée vers le récipient de stérilisation (2) à une pression P₄

4. Procédé selon l'une des revendications 1 à 3, **caractérisé en ce que** lors de la réalisation de l'étape d) la vapeur est soumise à une pression P₂ par réduction de la pression.

5. Procédé selon l'une des revendications 1 à 4, **caractérisé en ce que** lors de la réalisation de l'étape e) le condensat est chauffé à une température au-delà du point d'ébullition du condensat.

6. Procédé selon l'une des revendications 1 à 5, **caractérisé en ce que** lors de la réalisation de l'étape e) le condensat est chauffé à une température entre 110° C et 135° C, de préférence à une température de 130° C.

7. Procédé selon l'une des revendications 1 à 6, **caractérisé en ce que** lors de la réalisation de l'étape f) le condensat est transformé en vapeur.

8. Procédé selon l'une des revendications 1 à 7, **caractérisé en ce qu'**après la stérilisation les aliments sont refroidis.

9. Procédé selon l'une des revendications 1 à 8, **caractérisé en ce que** le procédé est réalisé de façon continue ou discontinue.
